Europäisches Patentamt

European Patent Office

Office européen des brevets

(11) Numéro de publication : **0 091 634**
**B1**

# (12) FASCICULE DE BREVET EUROPÉEN

(45) Date de publication du fascicule du brevet :
07.08.85

(51) Int. Cl.⁴ : **A 47 J 31/057, A 47 J 31/06**

(21) Numéro de dépôt : 83103279.2

(22) Date de dépôt : 05.04.83

(54) Cafetière ménagère.

(30) Priorité : 09.04.82 FR 8206256

(43) Date de publication de la demande :
19.10.83 Bulletin 83/42

(45) Mention de la délivrance du brevet :
07.08.85 Bulletin 85/32

(84) Etats contractants désignés :
AT BE CH DE IT LI NL SE

(56) Documents cités :
EP-A- 0 019 291
CH-A- 616 064
DE-A- 2 625 650
DE-U- 8 027 643

(73) Titulaire : MOULINEX
7 à 15, rue Jules-Ferry
F-93171 Bagnolet (FR)

(72) Inventeur : Amiot, Jacques Henri Julien
Société MOULINEX 25 route de Mamers
F-61000 Alençon (FR)

(74) Mandataire : May, Hans Ulrich
Thierschstrasse 27
D-8000 München 22 (DE)

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

## Description

L'invention se rapporte aux cafetières ménagères comprenant, dans un boîtier, un réservoir d'eau froide ainsi qu'un chauffe-eau alimenté par ce réservoir et alimentant lui-même une goulotte d'arrosage d'un filtre qui est monté au-dessus d'un récipient amovible collecteur d'infusion, lequel filtre présente en son fond un orifice d'écoulement équipé d'un dispositif d'obturation commandé par un levier d'ouverture qui est mobile par rapport au boîtier et dont le déplacement est provoqué par les mouvements de mise en place et de retrait du collecteur d'infusion de telle manière que ledit retrait entraîne la fermeture complète du dispositif d'obturation, empêchant ainsi tout écoulement de liquide en l'absence du collecteur, tandis que ladite mise en place provoque, par action du levier mobile, l'ouverture du dispositif d'obturation en vue de la collecte de l'infusion.

L'invention concerne, plus précisément, les cafetières de ce genre dans lesquelles, lors de la mise en place du collecteur, le dispositif d'obturation peut prendre, selon la position d'une manette mobile par rapport au boîtier, l'une ou l'autre de deux positions d'ouverture, à savoir une position de grande ouverture ou de passage rapide de l'infusion, et une position de petite ouverture ou de passage lent, ceci afin de permettre un réglage de la force de l'infusion au gré de l'usager.

Une telle cafetière à réglage de la force de l'infusion a été décrite dans le Brevet européen EP-A-19 291, dans lequel le dispositif d'obturation comprend deux clapets distincts associés respectivement à deux orifices d'écoulement de section différente pratiqués dans le fond du filtre, tandis que ce filtre est monté mobile par rapport au boîtier entre une première position pour laquelle le levier d'ouverture agit sur l'un des clapets, et une seconde position pour laquelle ce levier agit sur l'autre clapet.

Une telle forme de construction à deux clapets est évidemment relativement compliquée et donc onéreuse par rapport aux cafetières usuelles ne comportant pas de moyen de réglage de la force de l'infusion.

L'invention a pour but de réaliser une cafetière à réglage de la force de l'infusion de manière simple et économique.

Dans une cafetière selon l'invention, le dispositif d'obturation comprend un clapet unique du type comportant un bras qui est monté pivotant autour d'un axe horizontal et dont la partie située d'un côté dudit axe vient en prise avec le levier d'ouverture tandis que sa partie active située de l'autre côté dudit axe porte un bouchon d'obturation de l'orifice d'écoulement, et ladite partie active du bras présente, entre le bouchon et l'axe de pivotement, une portion élastiquement déformable, tandis que l'extrémité libre de cette partie active porte un bec situé au-dessus d'une butée à deux étages qui est solidaire de la manette mobile et qui est susceptible de prendre, lors du mouvement de cette manette, soit une position de grande ouverture pour laquelle l'étage inférieur de la manette est placé sous ledit bec, soit une position de petite ouverture pour laquelle l'étage supérieur est placé sous ce bec, de telle sorte que, lors de l'action du levier d'ouverture, le bouchon soit écarté de l'orifice d'écoulement d'une distance définie par l'appui du bec sur ledit étage inférieur si la butée est en ladite position de grande ouverture, et que, si la butée est en revanche en ladite position de petite ouverture, le bouchon soit partiellement engagé dans l'orifice d'écoulement grâce à l'action dudit étage supérieur sur le bec, provoquant une flexion vers le haut de ladite portion élastiquement déformable.

L'invention assure ainsi un réglage de la force de l'infusion par l'utilisation d'un seul clapet, tout en conservant, bien entendu, l'avantage de l'arrêt de tout écoulement lors du retrait du collecteur d'infusion.

Les caractéristiques et avantages de l'invention ressortiront d'ailleurs de la description qui va suivre, à titre d'exemple, en référence aux dessins annexés dans lesquels :

la figure 1 représente en coupe verticale une cafetière selon l'invention après retrait du récipient collecteur d'infusion, et donc avec le clapet d'obturation en position de fermeture complète de l'orifice d'écoulement de l'infusion ;

la figure 2 est une coupe verticale partielle de cette cafetière après mise en place du collecteur d'infusion et avec le clapet en position de grande ouverture, c'est-à-dire de passage rapide de l'infusion ;

la figure 3 est une vue analogue à la figure 2, mais avec le clapet en position de petite ouverture, c'est-à-dire de passage lent de l'infusion ;

la figure 4 représente la manette mobile, vue en élévation à partir de l'intérieur de la cafetière ;

la figure 5 est une vue de dessus du clapet.

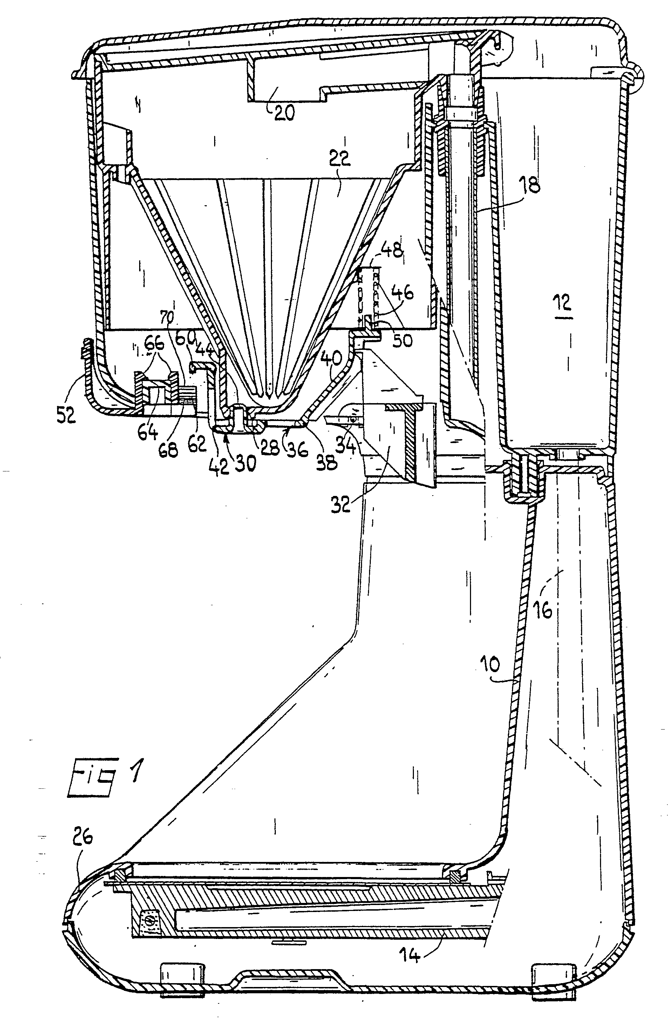

La cafetière représentée à la figure 1 comprend, dans un boîtier 10, un réservoir d'eau froide 12 ainsi qu'un chauffe-eau 14 alimenté par ce réservoir au moyen d'un tube descendant schématisé en 16. Ce chauffe-eau 14 alimente lui-même par un tube ascendant 18 une goulotte 20 d'arrosage d'un filtre 22 qui est monté au-dessus d'un récipient collecteur d'infusion 24.

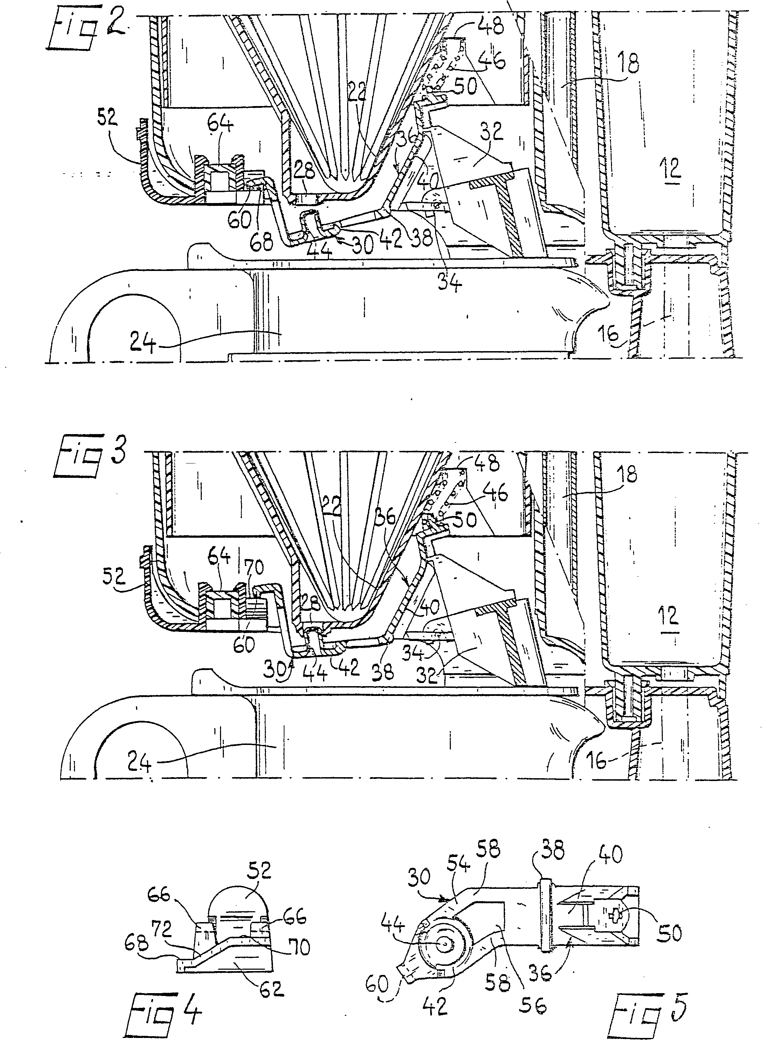

Le récipient collecteur 24 est posé de façon amovible sur la face supérieure d'une semelle 26 du boîtier, dans laquelle est agencé le chauffe-eau 14. Le filtre 22 présente la forme d'un cône adapté à recevoir un cornet en papier filtrant (non représenté) dans lequel on place le café en poudre. Ce filtre présente en son fond un orifice d'écoulement 28 équipé d'un clapet d'obturation 30 commandé par un levier d'ouverture 32 qui est monté pivotant par rapport au boîtier autour d'un pivot horizontal 34 et dont le déplacement est provoqué par les mouvements de mise en place et de retrait du collecteur d'infusion 24, de telle manière que ledit retrait entraîne la fermeture complète du clapet 30 (fig. 1), empêchant ainsi tout écoulement de liquide en l'absence du collecteur 24, tandis que ladite mise en place provoque, par action du levier 32, l'ouverture du clapet 30 en vue de la collecte de l'infusion (fig. 2 et 3).

Le clapet 30 comporte un bras 36 qui est monté pivotant autour d'un axe horizontal 38 et dont la partie 40 située d'un côté dudit axe 38 vient en prise avec le levier 32, tandis que sa partie active 42 située de l'autre côté de l'axe 38 porte un bouchon 44 d'obturation de l'orifice d'écoulement 28. Le bras pivotant 36 est rappelé vers la position de fermeture complète du clapet par un ressort 46 interposé entre un siège fixe 48 et l'extrémité 50 de la partie 40 en prise avec le levier 32. La partie active 42 du bras 36 est soumise à l'action d'une manette 52 montée mobile par rapport au boîtier de la cafetière entre deux positions pour lesquelles, lors de l'action du levier 32, le bouchon 44 est maintenu respectivement, soit en une position de grande ouverture (fig. 2), soit en une position de petite ouverture (fig. 3).

La partie active 42 du bras 36 présente, entre le bouchon 44 et l'axe de pivotement 38, une portion élastiquement déformable 54 réalisée par une diminution localisée de la section du bras, obtenue par exemple par un évidement 56 laissé entre deux branches espacées 58 (fig. 5). L'extrémité libre de la partie active 42 du bras porte un bec 60 situé au-dessus d'une butée 62 à deux étages qui est solidaire de la manette 52. Cette manette 52 est montée coulissante horizontalement sur un rail fixe 64 auquel elle est suspendue par des pattes 66 enserrant ce rail. Les deux étages 68 et 70 de la butée 62 sont constitués par deux portées horizontales espacées reliées par une rampe inclinée 72.

La butée 62 est ainsi susceptible de prendre, par coulissement de la manette 52, soit une position de grande ouverture (fig. 2) pour laquelle l'étage inférieur 68 est placé sous le bec 60, soit une position de petite ouverture (fig. 3) pour laquelle l'étage supérieur 70 est placé sous ce bec 60.

Ainsi, lors de l'action du levier d'ouverture 32 consécutive à la mise en place du collecteur d'infusion 24, si la butée 62 est placée en la position de grande ouverture le bouchon 44 s'écartera de l'orifice d'écoulement 28 d'une distance définie par l'appui du bec 60 sur l'étage inférieur 68 : cette position correspond au passage rapide de l'infusion (fig. 2). Si, en revanche, la butée 62 est placée en la position de petite ouverture, le bouchon 44 sera partiellement engagé dans l'orifice d'écoulement 28 grâce à l'action de l'étage supérieur 70 sur le bec 60, provoquant une flexion vers le haut de la portion 54 élastiquement déformable.

Le retrait du collecteur d'infusion 24 libère le levier 32 et par suite le clapet 30. Celui-ci retourne alors à sa position de fermeture complète (fig. 1) sous l'effet de rappel exercé par le ressort 46. On notera que ce retour à la fermeture complète s'effectue aussi bien à partir de la position de grande ouverture de la figure 2 qu'à partir de la position de petite ouverture de la figure 3.

**Revendications**

1. Cafetière ménagère comprenant, dans un boîtier (10), un réservoir d'eau froide (12) ainsi qu'un chauffe-eau (14) alimenté par ce réservoir et alimentant lui-même une goulotte (20) d'arrosage d'un filtre (22) qui est monté au-dessus d'un récipient amovible (24) collecteur d'infusion, ledit filtre (22) présentant en son fond un orifice d'écoulement (28) équipé d'un dispositif d'obturation (30) commandé par un levier d'ouverture (32) qui est mobile par rapport au boîtier et dont le déplacement est provoqué par les mouvements de mise en place et de retrait du collecteur d'infusion (24) de telle manière que ledit retrait entraîne la fermeture complète dudit dispositif d'obturation (30) tandis que ladite mise en place en provoque l'ouverture par action du levier mobile (32), ce dispositif d'obturation pouvant alors prendre, selon la position d'une manette (52) mobile par rapport au boîtier (10), l'une ou l'autre de deux positions d'ouverture, à savoir une position de grande ouverture ou de passage rapide de l'infusion et une position de petite ouverture ou de passage lent, ce dispositif d'obturation comprenant un clapet (30) comportant un bras (36) qui est monté pivotant autour d'un axe horizontal (38) et dont la partie (40) située d'un côté dudit axe (38) vient en prise avec le levier d'ouverture (32) tandis que sa partie active (42) située de l'autre côté dudit axe (38) porte un bouchon (44) d'obturation de l'orifice d'écoulement (28), caractérisée en ce que ladite partie active (42) du bras (36) présente, entre le bouchon (44) et l'axe de pivotement (38), une portion élastiquement déformable (54), tandis que l'extrémité libre de cette partie active porte un bec (60) situé au-dessus d'une butée (62) à deux étages qui est solidaire de la manette mobile (52) et qui est susceptible de prendre, lors du mouvement de cette manette, soit une position de grande ouverture pour laquelle l'étage inférieur (68) est placé sous ledit bec (60), soit une position de petite ouverture pour laquelle l'étage supérieur (70) est placé sous ce bec, de telle sorte que, lors de l'action du levier d'ouverture (32), le bouchon (44) soit écarté de l'orifice d'écoulement (28) d'une distance définie par l'appui du bec (60) sur ledit étage inférieur (68) si la butée est en ladite position de grande ouverture, et que, si la butée est en revanche en ladite position de petite ouverture, le bouchon (44) soit partiellement engagé dans l'orifice d'écoulement (28) grâce à l'action dudit étage supérieur (70) sur le bec (60), provoquant une flexion vers le haut de ladite portion (54) élastiquement déformable.

2. Cafetière selon la revendication 1, caractérisée en ce que la portion élastiquement déformable (54) du bras (36) est réalisée par une diminution localisée de la section de ce bras.

3. Cafetière selon la revendication 2, caractérisée en ce que la diminution de section est obtenue par un évidement (56) laissé entre deux branches espacées (58).

4. Cafetière selon l'une quelconque des revendications 1 à 3, caractérisée en ce que, la manette (52) étant montée coulissante horizontalement, les deux étages (68, 70) de la butée (62) sont constitués par deux portées horizontales espacées reliées par une rampe inclinée (72).

5. Cafetière selon l'une quelconque des revendications précédentes, caractérisée en ce que le bras pivotant (36) est rappelé vers la position de fermeture complète du clapet (30) par un ressort (46) interposé entre un siège fixe (48) et l'extrémité (50) de la partie (40) en prise avec le levier d'ouverture (32).

## Claims

1. A household coffee machine, comprising within a housing (10) a cold-water container (12) and a flow heater (14) supplied with water from said container, said flow heater in turn feeding a water overflow (20) for pouring water onto a filter (22), wherein the filter is held above a removable coffee pot (24) and the bottom of the filter (22) is provided with a discharge opening (28) equipped with a closure mechanism (30) adapted to be actuated by an opening lever (32) which is movable with respect to the housing and whose displacement is caused by the movements of insertion and retraction of the coffee pot, and wherein retraction causes complete closing of the closure mechanism (30) while insertion causes opening of the same by the action of the movable lever (32), wherein in accordance with the position of a handle (52) movable relative to the housing (10) said closure mechanism may take either one of two open positions, viz., a wide-aperture position or rapid passage of the filtrate, and a small-aperture position or slow passage thereof, wherein said closure mechanism comprises a closing flap (30) with an arm (36) held so as to be pivotable about a horizontal axis (38) and whose portion (40) located on one side of the axis (38) is brought into engagement with the opening lever (32) whereas the active portion located on the other side of the axis (38) carries a plug (44) for closing the discharge opening (28), characterized in that the active portion (42) of the arm (36) is provided between the plug (44) and the pivot axis (38) with an elastically deformable section (54), while the free end of said active portion carries a lug (60) which is disposed above a stop member (62) having two steps, said stop member being fixedly connected to the movable handle (52) and upon movement of said handle is adapted to take either a large-aperture position in which the lower step (68) is beneath the lug (60), or a small-aperture position in which the upper step (70) is beneath said lug, so that upon actuation of the opening lever (32) the plug (44) is removed from the discharge opening (28) by a distance which is controlled by the nose (60) resting on the lower step (68) when the stop member is in the large-aperture position, and when the stop member is in the small-aperture position, on the other hand, the plug (44) partially penetrates into the discharge opening (28) as the upper step (70) acts on the lug (60) and causes the elastically deformable section (54) to bend upwardly.

2. A coffee machine as claimed in claim 1, characterized in that the elastically deformable section (54) of said arm (36) is provided by a local reduction of the cross-section of said arm.

3. A coffee machine as claimed in claim 2, characterized in that the cross-sectional reduction is obtained by means of a recess (56) formed between two branches (58) which extend at a spacing from one another.

4. A coffee machine as claimed in any of the claims 1 to 3, characterized in that the handle (52) is held for horizontal displacement and that the two steps (68, 70) of the stop member (62) are formed by two relatively spaced horizontal supporting surfaces interconnected by an inclined ramp (72).

5. A coffee machine as claimed in any of the preceding claims, characterized in that the pivoting arm (36) is reset to the position of complete closure of the closing flap (30) by means of a spring (46), which is inserted between a stationary seat (48) and the end (50) of the portion (40) which is in engagement with the opening lever (32).

## Patentansprüche

1. Haushalts-Kaffeemaschine, die in einem Gehäuse (10) einen Kaltwasserbehälter (12) sowie einen von diesem Behälter gespeisten Wasserdurchlauferhitzer (14) aufweist, der selbst einen Wasserüberlauf (20) zum Begießen eines Filters (22) speist, wobei der Filter über einem abnehmbaren Kaffeekrug (24) gehalten ist und der Filter (22) an seinem Boden eine Ablauföffnung (28) aufweist, die mit einer Verschlußvorrichtung (30) ausgerüstet ist, die von einem Öffnungshebel (32) betätigt wird, der bezüglich des Gehäuses beweglich ist und dessen Verschiebung durch die Bewegungen des Einsetzens und Herausnehmens des Kaffeekrugs bewirkt wird, daß das Herausnehmen das vollständige Schließen der Verschlußvorrichtung (30) bewirkt, während das Einsetzen das Öffnen derselben durch die Wirkung des beweglichen Hebels (32) bewirkt, wobei diese Verschlußvorrichtung dabei je nach der Stellung eines bezüglich des Gehäuses (10) beweglichen Handgriffs (52) die eine oder andere von zwei Öffnungsstellungen einnehmen kann, nämlich eine Stellung der großen Öffnung oder des raschen Durchlaufs des Filtrats und eine Stellung der kleinen Öffnung oder des langsamen Durchlaufs, wobei diese Verschlußvorrichtung eine Verschlußklappe (30) mit einem Arm (36) aufweist, der um eine waagerechte Achse (38) schwenkbar gehalten ist und dessen auf der einen Seite der Achse (38) liegender Teil (40) mit dem Öffnungshebel (32) in Eingriff kommt, während sein auf der anderen Seite der Achse (38) liegender aktiver Teil einen Stopfen (44) zum Verschließen der Ablauföffnung (28) trägt, dadurch gekennzeichnet, daß der aktive Teil (42) des Armes (36) zwischen dem Stopfen (44) und der Schwenkachse (38) einen elastisch verformbaren Abschnitt (54) aufweist, während das freie Ende dieses aktiven Teils eine Nase (60) trägt, die oberhalb eines Anschlags (62) mit zwei Stufen angeordnet ist, der mit dem beweglichen Handgriff (52) fest verbunden ist und bei der Bewegung dieses Handgriffs entweder eine Stellung der großen Öffnung, in der sich die untere Stufe (68) unter der Nase (60) befindet, oder eine Stellung der kleinen Öffnung, in der sich die obere Stufe (70) unter dieser Nase befindet, einnehmen kann, so daß bei der Betätigung des Öffnungshebels (32) der Stopfen (44) von der Ablauföffnung (28) um eine Strecke entfernt wird, die durch das Aufliegen der Nase (60) auf der unteren Stufe (68) bestimmt ist, wenn sich der Anschlag in der Stellung der großen Öffnung befindet, und, wenn sich der Anschlag dagegen in der Stellung der kleinen Öffnung befindet, der Stopfen (44) teilweise in die Ablauföffnung (28) eindringt, da die obere Stufe (70) auf die Nase (60) einwirkt und eine Biegung des elastisch verformbaren Abschnitts (54) nach oben bewirkt.

2. Kaffeemaschine nach Anspruch 1, dadurch gekennzeichnet, daß der elastisch verformbare Abschnitt (54) des Armes (36) durch eine örtliche Querschnittsverringerung dieses Armes hergestellt ist.

3. Kaffeemaschine nach Anspruch 2, dadurch gekennzeichnet, daß die Querschnittsverringerung durch eine Ausnehmung (56) erhalten ist, die zwischen zwei in Abstand voneinander verlaufenden Zweigarmen (58) ausgebildet ist.

4. Kaffeemaschine nach einem der Ansprüche 1 bis 3, dadurch gekennzeichnet, daß der Handgriff (52) waagerecht verschiebbar gehalten ist und die zwei Stufen (68, 70) des Anschlags (62) von zwei in Abstand voneinander angeordneten und durch eine schräge Rampe (72) verbundenen waagerechten Auflageflächen gebildet sind.

5. Kaffeemaschine nach einem der vorangehenden Ansprüche, dadurch gekennzeichnet, daß der schwenkbare Arm (36) durch eine Feder (46), die zwischen einen feststehenden Sitz (48) und das Ende (50) des mit dem Öffnungshebel (32) in Eingriff stehenden Teils (40) eingesetzt ist, in die Stellung des vollständigen Schließens der Verschlußklappe (30) zurückgestellt wird.

FIG 1

Fig 2

Fig 3

Fig 4

Fig 5